(19) Europäisches Patentamt
European Patent Office
Office européen des brevets

(11) **EP 4 661 539 A1**

(12) **EUROPEAN PATENT APPLICATION**
published in accordance with Art. 153(4) EPC

(43) Date of publication:
**10.12.2025 Bulletin 2025/50**

(21) Application number: **23923871.0**

(22) Date of filing: **21.12.2023**

(51) International Patent Classification (IPC):
**H04W 72/044** (2023.01)

(52) Cooperative Patent Classification (CPC):
**H04W 4/02; H04W 4/029; H04W 72/044; H04W 72/0446; H04W 72/0453**

(86) International application number:
**PCT/CN2023/140561**

(87) International publication number:
**WO 2024/174708 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.02.2023 CN 202310171868**

(71) Applicant: **Huawei Technologies Co., Ltd.**
**Shenzhen, Guangdong 518129 (CN)**

(72) Inventors:
• **LI, Zhouqi**
**Shenzhen, Guangdong 518129 (CN)**
• **GAO, Yang**
**Shenzhen, Guangdong 518129 (CN)**
• **QU, Xiaoxia**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) This application discloses a communication method and apparatus. The method includes: A first network device performs blind detection on a first signal in a first beam for receiving the first signal from a terminal device, to obtain second time offset information, and determines a location of the terminal device based on the second time offset information. Then, the first network device may determine, based on the location of the terminal device, time offset information and frequency offset information that are obtained during communication between the first network device and the terminal device, to communicate with the terminal device. According to the method, the first network device determines the location of the terminal device by performing blind detection on the first signal, to determine offset information that exceeds a capability of the terminal device. In this way, in a scenario like an NTN scenario, the first network device may communicate with the terminal device.

FIG. 4

**Description**

CROSS-REFERENCE TO RELATED APPLICATIONS

This application claims priority to Chinese Patent Application No. 202310171868.7, filed with the China National Intellectual Property Administration on February 21, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In a mobile communication system, for example, in a new radio (new radio, NR) system, a non-terrestrial network (non-terrestrial network, NTN) is introduced. In the NTN, a network device or some functions of the network device may be deployed on a satellite, to provide a service for a terminal device.

Because the satellite runs at a high speed and a high orbital altitude, a large time offset and a large frequency offset are generated when the satellite communicates with the terminal device on the ground. For example, when a low-earth orbit (low-earth orbit, LEO) satellite runs at an orbital altitude of 500 kilometers (km) and a communication frequency of 5 gigahertz (GHz), a generated maximum frequency offset may be 150 kilohertz (kHz), and a generated maximum transmission delay may be 6 milliseconds (ms). The transmission delay may represent a time offset.

Currently, the terminal device may measure a time offset and a frequency offset based on a received signal of a physical channel. However, according to the method, a time offset and a frequency offset that are generated in the NTN cannot be measured. For example, in the NR system, a maximum frequency offset that can be measured by the terminal device theoretically is 15 kHz, which is far less than the frequency offset generated in the NTN.

How to determine an offset in the NTN is a problem that needs to be resolved urgently.

SUMMARY

This application provides a communication method and apparatus, to determine an offset in an NTN.

According to a first aspect, an embodiment of this application provides a communication method. The method includes: A first network device performs blind detection on a first signal in a first beam for receiving the first signal from a terminal device, to obtain second time offset information, where the second time offset information is reference time offset information between the first network device and the terminal device. The first network device may determine second frequency offset information based on the second time offset information, where the second frequency offset information is reference frequency offset information between the first network device and the terminal device. Then, the first network device may determine a location of the terminal device based on the second time offset information and the second frequency offset information, and determine first offset information based on the location of the terminal device, where the first offset information includes first time offset information and/or first frequency offset information, the first time offset information is sending time offset information between the first network device and the terminal device, and the first frequency offset information is sending frequency offset information between the first network device and the terminal device. The first network device may communicate with the terminal device based on the first offset information.

According to the method, the first network device determines offset information between the first network device and the terminal device without cooperation of the terminal device, to determine offset information that exceeds a processing capability of the terminal device. In this way, in a scenario like an NTN scenario, the terminal device may communicate with the network device. In addition, in the method, the first network device may determine the location of the terminal device by performing blind detection on a signal from the terminal device, and determine the offset information between the first network device and the terminal device based on the location of the terminal device. In this way, the first network device and the terminal device do not need to exchange a signal for determining the offset information, so that signaling overheads can be reduced.

In a possible design, the first network device may perform blind detection on a sequence of the first signal in the first beam in a first time window, where time offset information corresponding to first time in the first time window is the second time offset information; a correlation that is obtained through blind detection and that is between the sequence of the first signal and a first reference sequence is the largest at the first time in the first time window; and the first time window is determined based on the first beam. According to the design, the first network device may perform blind detection in the first time window, to reduce blind detection time, and reduce blind detection complexity.

Optionally, the first time window is [Tmin, Tmax], where Tmin=OC/c, Tmax=OA/c, OA is a distance between the first network device and a point A, OC is a distance between the first network device and a point C, the point A is a point that is within coverage of the first beam and that is farthest from a subsatellite point of the first network device, the point C is a point that is within the coverage and that is closest to the subsatellite point, and c is a speed of light. In the design, an implementation of the first time window is provided, which is easy to implement. In addition, the first network device may accurately determine the second time offset information in the first time window.

In a possible design, the first network device may determine a location curve corresponding to the second time offset information based on the second time offset information, where a distance between any point on the location curve and the first network device corresponds to the second time offset information. The first network device may determine a first frequency offset range based on the location curve and a range of the first beam, where the first frequency offset range is a reference frequency offset range between the first network device and the terminal device. Then, the first network device may perform blind detection on the sequence of the first signal within the first frequency offset range, to obtain the second frequency offset information, where the second frequency offset information is frequency offset information that makes the correlation that is obtained through blind detection and that is between the sequence of the first signal and the first reference sequence the largest. According to the design, the first network device may perform blind detection within the first frequency offset range, to accurately determine the second frequency offset information.

In a possible design, the first network device may determine the first offset information by using the following steps: The first network device determines the first time offset information based on the location of the terminal device and a location of the first network device; and/or the first network device determines the first frequency offset information based on the location of the terminal device and the location, a speed, and a movement direction of the first network device.

Optionally, a first functional relationship exists among the location of the terminal device, the location of the first network device, and the first time offset information; and a second functional relationship exists among the location of the terminal device, the location, the speed, and the movement direction of the first network device, and the first frequency offset information.

According to the design, the first network device accurately determines time offset information and/or frequency offset information between the first network device and the terminal device when the first network device is located at any location of a running orbit of the first network device.

In a possible design, the first network device may determine a second frequency offset range based on the location of the terminal device and the location, the speed, and the movement direction of the first network device, where the second frequency offset range is a sending frequency offset range between the first network device and the terminal device. Then, the first network device may perform blind detection on a sequence of a communication signal between the first network device and the terminal device within the second frequency offset range, to obtain the first frequency offset information, where the first frequency offset information is frequency offset information that makes a correlation that is obtained through blind detection and that is between the sequence of the communication signal and a second reference sequence the largest. In the design, the first network device may perform blind detection within the second frequency offset range, to obtain the first frequency offset information between the first network device and the terminal device, to improve accuracy of the first frequency offset information, and improve communication quality between the first network device and the terminal device.

In a possible design, the first network device may communicate with the terminal device by using the following steps: The first network device determines a first timing advance based on the first time offset information, and communicates with the terminal device based on the first timing advance; and/or the first network device performs phase compensation on the communication signal between the first network device and the terminal device based on the first frequency offset information. In the design, the first network device may process a signal based on the first time offset information and/or the first frequency offset information, so that the first network device can communicate with the terminal device without perception of the terminal device.

In a possible design, the first network device may determine the first timing advance and a second timing advance based on the first time offset information. Then, the first network device may send, to the terminal device, information indicating the second timing advance, where the second timing advance is a timing advance used by the terminal device to process a second signal; and receive the second signal from the terminal device based on the first timing advance. In the design, the first network device and the terminal device may jointly process a signal, to support the offset information that exceeds the processing capability of the terminal device, so that the terminal device can communicate with the first network device.

In a possible design, the first network device may communicate with the terminal device based on the first offset information by using a second beam and a third beam, where each of the second beam and the third beam is any beam in a beam set of the first network device, and a first timing advance corresponding to the second beam is different from a first timing advance corresponding to the third beam. According to the example, the first network device may receive a signal from the terminal device by using a first timing advance corresponding to each beam, so that quality of the signal received by using each beam can be improved, thereby improving communication efficiency. In addition, a receiving moment of an uplink signal is related to a first timing advance. Therefore, according to the design, the uplink signal can be received at specified time sequence locations of different beams, and phase compensation can be performed on a signal between the first network device and the terminal device, to ensure that the first network device and the terminal device are always in a synchronization state.

In a possible design, the first signal is a PRACH signal.

According to a second aspect, an embodiment of this application provides a communication apparatus, including units configured to perform steps in any one of the foregoing aspects.

According to a third aspect, an embodiment of this application provides a communication apparatus, including at least one processing element and at least one storage element. The at least one storage element is configured to store a program and data, and the at least one processing element is configured to read and execute the program and the data stored in the storage element, so that the method provided in any one of the foregoing aspects of this application is implemented.

According to a fourth aspect, an embodiment of this application provides a communication system, including a terminal device and a first network device. The terminal device is configured to send a first signal, and the first network device is configured to perform the method provided in the first aspect based on the first signal.

According to a fifth aspect, an embodiment of this application further provides a computer program. When the computer program runs on a computer, the computer is enabled to perform the method provided in any one of the foregoing aspects.

According to a sixth aspect, an embodiment of this application further provides a computer-readable storage medium. The computer-readable storage medium stores a computer program. When the computer program is executed by a computer, the computer is enabled to perform the method provided in any one of the foregoing aspects.

According to a seventh aspect, an embodiment of this application further provides a chip. The chip is configured to read a computer program stored in a memory, to perform the method provided in any one of the foregoing aspects.

According to an eighth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the eighth aspect, refer to the descriptions of the technical effects that can be achieved in any one of the first aspect and the possible designs of the first aspect. Repeated parts are not described.

BRIEF DESCRIPTION OF DRAWINGS

FIG. 1 is a diagram of an architecture of a communication system according to an embodiment of this application;
FIG. 2 is a diagram of an architecture of a satellite system in a transparent transmission mode according to an embodiment of this application;
FIG. 3 is a diagram of an architecture of a satellite system in a regenerative mode according to an embodiment of this application;
FIG. 4 is a flowchart of a communication method according to an embodiment of this application;
FIG. 5 is a diagram of a beam according to an embodiment of this application;
FIG. 6 is a diagram of a relationship between an equal-time offset line and an equal-frequency offset line according to an embodiment of this application;
FIG. 7 is a diagram of first timing advances corresponding to different beams according to an embodiment of this application;
FIG. 8 is a flowchart of another communication method according to an embodiment of this application;
FIG. 9 is a diagram of distances between a plurality of network devices and a terminal device according to an embodiment of this application;
FIG. 10 is a diagram of a structure of a communication apparatus according to an embodiment of this application; and
FIG. 11 is a diagram of a structure of another communication apparatus according to an embodiment of this application.

DESCRIPTION OF EMBODIMENTS

This application provides a communication method and a device, to determine an offset in an NTN. The method and the apparatus are based on a same technical concept. Because problem-resolving principles of the method and the apparatus are similar, mutual reference may be made to implementations of the apparatus and the method, and repeated parts are not described again.

The following first describes some terms in this application, to facilitate understanding of a person skilled in the art.

(1) A communication apparatus is generally an apparatus having a communication function. For example, the communication apparatus may be but is not limited to a terminal apparatus, a network device, an access point, a relay device, or the like.

(2) An NTN is a network established by using a non-terrestrial communication technology, and may include but is not limited to a network that performs a communication service by using a spectrum resource on a communication platform like a satellite platform, an unmanned aerial vehicle (unmanned aerial vehicle, UAV) platform, or a high altitude communication platform (high altitude platform station, HAPS).

For example, the NTN may include but is not limited to a satellite system, a UAV communication system, and a HAPS system. Based on different altitudes of satellites to the ground (that is, orbital altitudes of the satellites), the satellite system may be classified into a geostationary earth orbit (geostationary orbit, GEO) satellite system, a medium earth orbit (medium earth orbit, MEO) satellite system, a LEO satellite system, and the like.

Compared with a terrestrial communication network, the NTN has features such as wider coverage, a higher path loss, a longer delay, a higher speed, and lower costs.

(3) An offset of a signal includes two parts: time offset information (a time offset for short) of the signal and frequency offset information (a frequency offset for short) of the signal.

The time offset information of the signal is a time offset of the same signal at a transmit end and a receive end, which mainly includes a transmission delay of the signal. When the transmission delay exists in a communication process, the signal may be processed by using a timing advance (timing advance, TA).

The frequency offset information of the signal is a frequency offset of the same signal at the transmit end and the receive end, which mainly includes a Doppler shift (also referred to as a Doppler frequency shift, Doppler shift). The Doppler shift is a change in a phase and a frequency of the signal caused by a propagation path difference when the receive end and/or the transmit end moves at a constant speed along a direction.

In this application, frequency offset information represents an amplitude of frequency swing of a frequency-modulated wave, which may be represented by using an absolute value or a relative value. When the frequency offset information is represented by using the absolute value, the frequency offset information may represent a frequency difference between a maximum frequency swing value and a center frequency. In this case, the frequency offset information may be measured in, but not limited to at least one of the following: hertz (Hz) and kilohertz (kHz). When the frequency offset information is represented by using the relative value, the frequency offset information may represent a relative relationship between a maximum frequency swing value and a center frequency. In this case, the frequency offset information may be measured in parts per million (parts per million, ppm).

(4) Location of a terminal device or a network device. In embodiments of this application, the location of the terminal device or the network device may be for calculating a Doppler shift and a transmission delay of a signal. For example, a location of any device may be earth-centered, earth-fixed (Earth-Centered, Earth-Fixed, ECEF) coordinates of the device.

(5) A beam is a communication resource, or is understood as a spatial domain behavior of signal transmission. Specifically, the beam may be distribution of signal strength formed in different transmission directions in space after a signal is transmitted by using an antenna, and one beam may correspond to one transmission direction. In this application, for ease of description, the beam and the transmission direction are considered as the same term, and may be replaced with each other. A technology for forming the beam may be a beamforming technology or another technical means. The beamforming technology may be specifically a digital beamforming technology, an analog beamforming technology, and a hybrid digital/analog beamforming technology. Different beams may be considered as different resources.

In embodiments of this application, unless otherwise specified, a quantity of nouns indicates "a singular noun or a plural noun", that is, "one or more". "At least one" means one or more, and "a plurality of" means two or more. A term "and/or" describes an association relationship of associated objects, and indicates that three relationships may exist. For example, A and/or B may indicate the following three cases: Only A exists, both A and B exist, and only B exists. "At least one of the following items (pieces)" or a similar expression thereof is any combination of these items (pieces), including a single item (piece) or any combination of a plurality of items (pieces).

In addition, it should be understood that in the descriptions of this application, words such as "first" and "second" are merely used for distinguishing, and should not be understood as an indication or implication of relative importance or an indication or implication of a sequence.

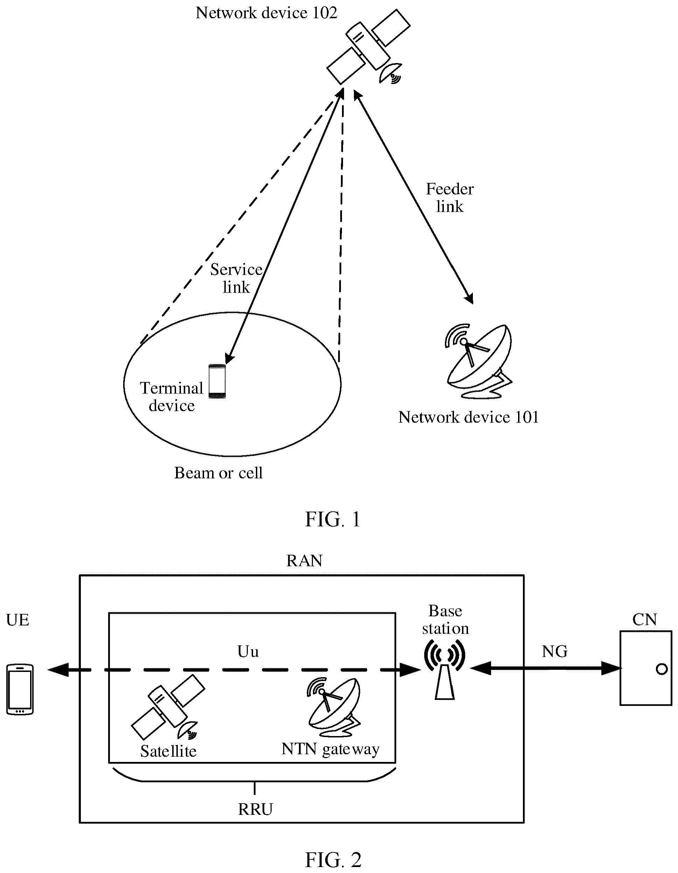

FIG. 1 is a diagram of an architecture of an NTN communication system to which an embodiment of this application is applicable. The communication system may include a terminal device and a network device (for example, a network device 101 and a network device 102 in the figure). A communication link between the network devices is a feedback link (or referred to as a feeder link) (feeder link), and a communication link between the network device and the terminal device is a service link (service link).

The network device 101 may be a gateway station (or referred to as a terrestrial station, an earth station, or a signal gateway station) (gateway), and may be configured to connect the terminal device to a core network.

The network device 102 may be a satellite (or referred to as a satellite base station), a high altitude communication platform (high altitude platform station, HAPS), or the like.

In this embodiment of this application, a communication mode of the network device 102 may include a regenerative (regenerative) mode and a transparent (transparent) transmission mode.

When the communication mode of the network device 102 is the regenerative mode, the network device 102 may be used as a base station for wireless communication. For example, the network device 102 may be used as the base station for wireless communication, for example, an artificial earth satellite or a high altitude aircraft, to process a communication signal.

When the communication mode of the network device 102 is the transparent transmission mode, the network device 101 may be used as a base station for wireless communication, and the network device 102 may be used as a relay of the base station to perform transparent transmission of a signal between the network device 101 and the terminal device.

It should be understood that FIG. 1 shows only one network device 101 and one network device 102. In actual use, an architecture of a plurality of network devices 101 and/or one network device 102 may be used as required. Each network device 102 may provide a service for one or more terminal devices, each network device 102 may correspond to one or more network devices 101, and each network device 101 may correspond to one or more network devices 102. This is not specifically limited in this application. In addition, the communication system in FIG. 1 may also include another device. For example, the communication system may also include a wireless relay device and a wireless backhaul device.

In this application, the terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, customer premise equipment (customer premise equipment, CPE), a terminal agent, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device or a computing device having a wireless communication function, another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In this application, the network device is a device that is in a mobile communication system and that connects a terminal apparatus to a wireless network. As a node in a radio access network, the network device may also be referred to as a base station, a radio access network (radio access network, RAN) node (or device), an access point (access point, AP), or an access network (access network, AN) device.

Currently, some examples of the network device are as follows: a next generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmission point (transmission reception point, TRP), a transmitting point (transmitting point, TP), a mobile switching center, a home base station (for example, a home evolved NodeB or a home NodeB, HNB), a baseband unit (baseband unit, BBU), or the like.

In some deployments, the gNB may include a central unit (central unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from the information at the PHY layer. Therefore, in the architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in the core network (core network, CN). This is not limited in this application.

FIG. 2 is a diagram of another network architecture applicable to this application. As shown in FIG. 2, a terminal device communicates with a terrestrial base station through a universal terrestrial radio access network-user (universal terrestrial radio access network-user, Uu) interface. A satellite may implement transparent payload transmission between the terminal device and the terrestrial base station. The satellite and an NTN gateway may be considered as remote radio units (remote radio units, RRUs) of the terrestrial base station to implement transparent forwarding of a signal. In other words, the satellite supports only functions such as radio frequency filtering, frequency conversion, and amplification, and a waveform of the signal remains unchanged. Forwarding by the satellite is transparent to the terminal device. The terrestrial base station may communicate with a core network (core network, CN) through a next generation network (next generation, NG) interface. The terrestrial base station and the core network exchange, through the NG interface, non-access stratum (non-access stratum, NAS) signaling of the core network and service data of the terminal device.

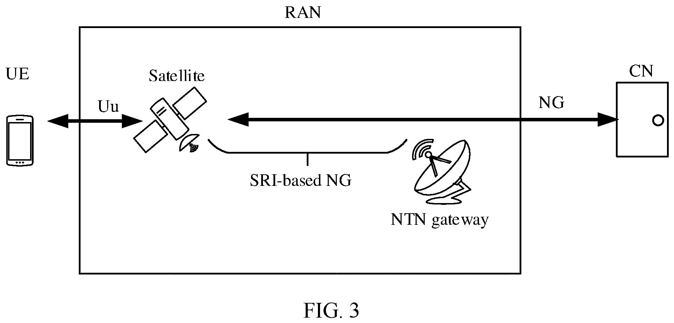

FIG. 3 is a diagram of another network architecture applicable to this application. A satellite has some or all functions of a network device, and may be referred to as a satellite base station. The satellite may provide a radio access service, and schedule a radio resource for a terminal device that accesses a network through the satellite. The satellite communicates with the terminal device through a Uu interface. The satellite may communicate with a CN through an NG interface. The satellite and the core network may exchange, through the NG interface, NAS signaling and service data of the terminal device. A satellite radio interface (satellite radio interface, SRI) is a feeder link between an NTN gateway and the satellite. In FIG. 3, the SRI may be used as a part of the NG interface to implement communication and exchange between the satellite and the core network.

It should be noted that the communication systems shown in FIG. 1 to FIG. 3 do not constitute a limitation on a communication system to which embodiments of this application are applicable. Therefore, the method provided in embodiments of this application is further applicable to communication systems of various standards. For example, embodiments of this application may be applied to a 4th generation mobile communication system (4th generation, 4G) system, a 5th generation (5th generation, 5G) communication system, an NTN system, vehicle to everything (vehicle to everything, V2X), long term evolution-internet of vehicles (LTE-vehicle, LTE-V), vehicle to vehicle (vehicle to vehicle, V2V), internet of vehicles, machine type communication (machine type communication, MTC), internet of things (internet of things, IoT), long term evolution-machine to machine (LTE-machine to machine, LTE-M), machine to machine (machine to machine, M2M), or a future mobile communication system. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Because a satellite runs at a high speed and a high orbital altitude, a large time offset and a large frequency offset are generated when the satellite communicates with a terminal device on the ground. For example, when an LEO satellite runs at an orbital altitude of 500 km and a communication frequency of 5 GHz, a generated maximum frequency offset may be 150 kHz, and a generated maximum transmission delay may be 6 ms. The transmission delay may represent a time offset. Currently, the terminal device may measure a time offset and a frequency offset based on a received signal of a physical channel. However, according to the method, a time offset and a frequency offset that are generated in an NTN cannot be measured. For example, in an NR system, a maximum frequency offset that can be measured by the terminal device theoretically is 15 kHz, which is far less than the frequency offset generated in the NTN. In this way, the terminal device cannot effectively communicate with the satellite. Therefore, how to determine an offset in the NTN is a problem that needs to be resolved urgently.

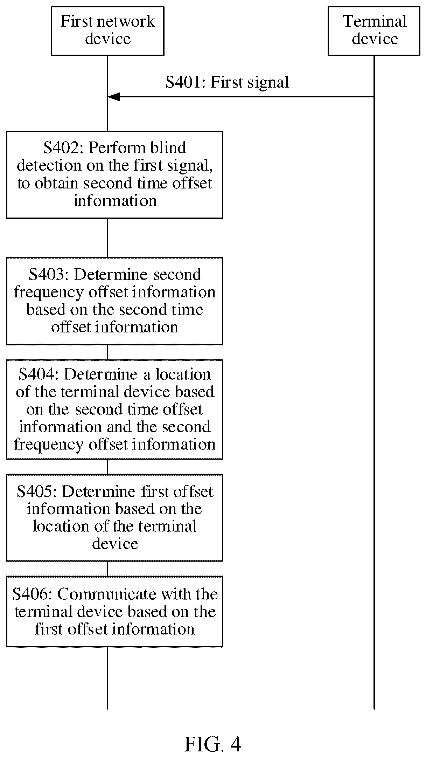

To resolve the foregoing problems, an embodiment of this application provides a communication method. The method may be applied to the communication systems shown in FIG. 1 to FIG. 3. The following describes a procedure of the method in detail with reference to a flowchart shown in FIG. 4.

S401: A terminal device sends a first signal. Correspondingly, a first network device receives the first signal from the terminal device.

The first network device may be a satellite or a HAPS.

For example, the first signal may be a physical random access channel (physical random access channel, PRACH) signal. When the terminal device accesses a network, the terminal device may send the PRACH signal.

S402: The first network device performs blind detection on the first signal in a first beam for receiving the first signal from the terminal device, to obtain second time offset information.

In this application, the second time offset information is reference time offset information between the first network device and the terminal device. In other words, when communicating with the terminal device, the first network device may refer to the second time offset information. For example, the first network device may obtain, by referring to the second time offset information, time offset information used when the first network device communicates with the terminal device. For specific content, refer to a manner of determining first time offset information below. Details are not described herein.

Optionally, the second time offset information is time offset information between the first network device and the terminal device when the first network device is located at a first point. When the first network device is located at the first point, the first network device receives the first signal.

In some possible manners, S402 may include the following steps A1 and A2.

A1: The first network device performs blind detection on a sequence of the first signal in the first beam in a first time window.

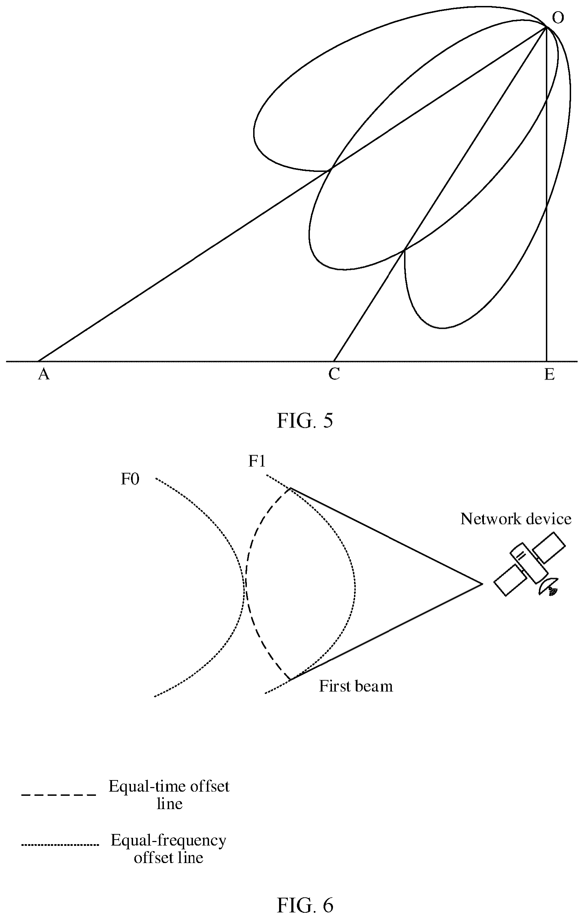

In this application, the first time window is determined based on the first beam. For example, the first beam is a beam shown in FIG. 5. A point O is a location of the first network device, that is, the point O is the first point; a point E is a subsatellite point of the first network device, that is, the point E is an intersection of a connection line between the first network device and a center of the earth and a surface of the earth; a point A is a point that is within coverage of the first beam and that is farthest from the point E; and a point C is a point that is within the coverage of the first beam and that is closest to the point E. When the coverage of the first beam includes the point E, the point C is the point E, and OC is a height of the first network device. In this case, the first time window is [Tmin, Tmax], where Tmin=OC/c, Tmax=OA/c, OA is a distance between the point O and the point A, OC is a distance between the point O and the point C, and c is a speed of light.

In some possible manners, the first beam may be a beam that is scheduled by the first network device and that is for receiving a signal. Optionally, a width of the first beam may be less than a width threshold. The width threshold may be preset, or may be obtained by the first network device from another device. The another device is, for example, a core network device or a terrestrial base station connected to the first network device. A smaller width of the first beam indicates a smaller range within which the first network device performs blind detection, and lower calculation complexity. Therefore, according to the method, calculation complexity of the first network device can be reduced.

A2: The first network device determines that time offset information corresponding to first time in the first time window is the second time offset information. A correlation that is obtained through blind detection and that is between the sequence of the first signal and a first reference sequence is the largest at the first time in the first time window. For example, when the first time is Tmin, the second time offset information may be OC/c.

S403: The first network device determines second frequency offset information based on the second time offset information.

In this application, the second frequency offset information is reference frequency offset information between the first network device and the terminal device. In other words, when communicating with the terminal device, the first network device may refer to the second frequency offset information. For example, the first network device may obtain, by referring to the second time offset information, frequency offset information used when the first network device communicates with the terminal device. For specific content, refer to a manner of determining first frequency offset information below. Details are not described herein.

Optionally, the second frequency offset information is frequency offset information between the first network device and the terminal device when the first network device is located at a first point. When the first network device is located at the first point, the first network device receives the first signal.

In some possible manners, S403 may include the following steps B1 to B3.

B1: The first network device determines a location curve corresponding to the second time offset information based on the second time offset information.

A distance between any point on the location curve and the first network device corresponds to the second time offset information. For example, the distance between any point on the location curve and the first network device is a product of the second time offset information and a speed of light. In other words, the location curve is an equal-time offset line on which a time offset is the second time offset information. For example, the location curve is an equal-time offset line in FIG. 6.

B2: The first network device determines a first frequency offset range based on the location curve and a range of the first beam.

The first frequency offset range is a reference frequency offset range between the first network device and the terminal device. In other words, when determining the second frequency offset information, the first network device may refer to the first frequency offset range. The first frequency offset range includes the second frequency offset information.

For example, as shown in FIG. 6, an equal-frequency offset line of the first network device meets a hyperboloid characteristic. The first network device may determine coverage of the first beam based on a direction and a width of the first beam. Within the coverage, a plurality of equal-frequency offset lines may intersect with an equal-time offset line used as the location curve, and frequency offset information corresponding to the plurality of equal-frequency offset lines falls within the first frequency offset range. Therefore, the first frequency offset range may be [F0, F1].

B3: The first network device performs blind detection on the sequence of the first signal within the first frequency offset range, to obtain the second frequency offset information. The second frequency offset information is frequency offset information that makes the correlation that is obtained through blind detection and that is between the sequence of the first signal and the first reference sequence the largest. For example, when frequency offset information is F0, the correlation that is obtained through blind detection and that is between the sequence of the first signal and the first reference sequence is the largest. In this case, the second frequency offset information is F0.

S404: The first network device determines a location of the terminal device based on the second time offset information and the second frequency offset information.

Optionally, the first network device may determine the location of the terminal device based on a location, a speed, and a movement direction of the first network device, the second time offset information, and the second frequency offset information. The location, the speed, and the movement direction of the first network device may be determined by using an ephemeris of the first network device. The ephemeris of the first network device may indicate a location of the first network device at any moment.

For example, the following functional relationships exist among the location, the speed, and the movement direction of the first network device, time offset information, frequency offset information, and the location of the terminal device:

Time offset information=$f_0$ (the location of the terminal device and the location of the first network device) Functional relationship 1

Frequency offset information=$f_1$ (the location of the terminal device, the location of the first network device, the speed of the first network device, and the movement direction of the first network device) Functional relationship 2

Therefore, after learning the location, the speed, and the movement direction of the first network device, the second time offset information, and the second frequency offset information, the first network device may determine the location of the terminal device based on Functional relationship 1 and Functional relationship 2.

Optionally, the method is described by using an example in which one network device determines the location of the terminal device. In actual application, a plurality of network devices may jointly determine the location of the terminal device by using the method. For example, the first network device determines, by using the method, that the location of the terminal device is a point $D_1$, a network device #1 determines, by using the method, that the location of the terminal device is a point $D_2$, and the network device #1 determines, by using the method, that the location of the terminal device is a point $D_3$. After receiving information indicating the point $D_2$ from the network device #2 and information indicating the point $D_3$ from the network device #2, the first network device may determine the location of the terminal device based on the point $D_1$, the point $D_2$, and the point $D_3$. For example, the first network device determines a central point among the point $D_1$, the point $D_2$, and the point $D_3$ as the location of the terminal device.

S405: The first network device determines first offset information based on the location of the terminal device.

In this application, the first offset information includes the first time offset information and/or the first frequency offset information. The first time offset information is sending time offset information between the first network device and the terminal device, that is, time offset information used when the first network device communicates with the terminal device. The first frequency offset information is sending frequency offset information between the first network device and the terminal device, that is, frequency offset information used when the first network device communicates with the terminal device.

For example, the first time offset information and the first frequency offset information are respectively time offset information and frequency offset information between the first network device and the terminal device when the first network device is located at a second point. When the first network device is located at the second point, the first network device communicates with the terminal device. The second point may be the same as or different from the first point. In an example, when the second point is the same as the first point, the first time offset information is the second time offset information, and the first frequency offset information is the second frequency offset information. When the second point is different from the first point, the first network device determines the first time offset information and the first frequency offset information in the following determining manner. In another example, regardless of whether the first point is the same as the second point, the first network device may determine the first time offset information and the first frequency offset information in the following determining manner.

The following separately describes manners of determining the first time offset information and the first frequency offset information.

1. First time offset information.

The first network device may determine the first time offset information based on the location of the terminal device and the location of the first network device. A functional relationship exists among the location of the terminal device, the location of the first network device, and the first time offset information. For example, the functional relationship is Functional relationship 1 described above. In this way, the first network device may determine time offset information between the first network device and the terminal device when the first network device is located at any location of a running orbit of the first network device. In the manner, the first network device can quickly and accurately determine the frequency offset information between the first network device and the terminal device.

2. First frequency offset information.

The first network device may determine the first frequency offset information based on the location of the terminal device and the location, the speed, and the movement direction of the first network device. The following separately describes the content by using Implementation 1 and Implementation 2.
Implementation 1: A functional relationship exists among the location of the terminal device, the location, the speed, and the movement direction of the first network device, and the first frequency offset information. For example, the functional relationship is Functional relationship 2 described above. In this way, the first network device may determine frequency offset information between the first network device and the terminal device when the first network device is located at any location of a running orbit of the first network device. In the manner, the first network device can quickly and accurately determine the frequency offset information between the first network device and the terminal device.
Implementation 2: The first network device may determine the first frequency offset information by using the following steps C1 and C2.
C1: The first network device determines a second frequency offset range based on the location of the terminal device and the location, the speed, and the movement direction of the first network device.
The second frequency offset range is a sending frequency offset range between the first network device and the terminal device. In other words, when determining the first frequency offset information, the first network device may refer to the second frequency offset range. The second frequency offset range includes the first frequency offset information.
For example, the first network device may obtain frequency offset information #1 based on the location of the terminal device and the location, the speed, and the movement direction of the first network device. For example, the first network device may substitute the location of the terminal device and the location, the speed, and the movement direction of the first network device into Functional relationship 2, to obtain the frequency offset information #1. Then, the first network device may determine the second frequency offset range based on the frequency offset information #1. A difference between any frequency offset information and the frequency offset information #1 in the second frequency offset range is less than or equal to a frequency offset threshold. In other words, the second frequency offset range is [frequency offset information #1-$\Delta$F, frequency offset information #1+$\Delta$F], where $\Delta$F is the frequency offset threshold. The frequency offset threshold is related to performance and a specification of the first network device. The frequency offset threshold may be preset, or may be determined in real time based on the first network device.
The following uses an example to describe a method for obtaining the frequency offset information #1 by the first network device.
It is assumed that in an ECEF coordinate system, the location of the first network device is $(x_N, y_N, z_N)$, a speed vector $\vec{v_s}$ of the first network device is $(v_x, v_y, v_z)$, and the foregoing information may be obtained by using the ephemeris of the first network device; and the location of the terminal device obtained in S404 is $(x_E, y_E, z_E)$.

If a parameter $\vec{l}$ is shown in Formula (1):

$$\vec{l} = (x_E - x_N, y_E - y_N, z_E - z_N) \quad (1)$$

then

$$v_l = |\vec{v_l}| = |\vec{v}| \times \cos < (\vec{v}), \vec{l} >$$

$$= |\vec{v}| \times \frac{\vec{v} \cdot \vec{l}}{|\vec{v}||\vec{l}|} = \frac{\vec{v} \cdot \vec{l}}{|\vec{l}|} = \frac{v_x(x_E - x_N) + v_y(y_E - y_N) + v_z(z_E - z_N)}{\sqrt{(x_E - x_N)^2 + (y_E - y_N)^2 + (z_E - z_N)^2}} \quad (2)$$

$\vec{v_l}$ is a radial speed from the first network device to the terminal device. The parameter $\vec{l}$ is vector information from the first network device to the terminal device, including direction information and distance information from the first network device to the terminal device.

In this case, the frequency offset information #1 is $f_d$:

$$f_d = \frac{f_c v_l}{c} \ (3)$$

$f_c$ is a carrier frequency used when the first network device communicates with the terminal device, and c is the speed of light.

C2: The first network device performs blind detection on a sequence of a communication signal between the first network device and the terminal device within the second frequency offset range, to obtain the first frequency offset information. The first frequency offset information is frequency offset information that makes a correlation that is obtained through blind detection and that is between the sequence of the communication signal and a second reference sequence the largest.

Optionally, the communication signal may be but is not limited to one or more of a PRACH signal, a random access response (random access response, RAR) signal, a message 3 in a random access process, a contention resolution message, a physical downlink control channel (physical downlink control channel, PDCCH) signal, a physical downlink shared control channel (physical downlink shared channel, PDSCH) signal, a physical uplink control channel (physical uplink control channel, PUCCH) signal, and a physical uplink shared control channel (physical uplink shared channel, PUSCH) signal.

Because an error may exist in actual measurement, the location of the terminal device determined through measurement may be inaccurate. In Implementation 2, the second frequency offset range is first determined, and then actually used frequency offset information is determined within the second frequency offset range through blind detection, to improve accuracy of the frequency offset information, and improve communication quality between the first network device and the terminal device.

In addition, the first network device may periodically determine the first time offset information and the first frequency offset information in the foregoing determining manner. A periodicity in the foregoing determining manner may be preset, may be obtained by the first network device from another device, or may be determined by the first network device. For example, the first network device determines the periodicity based on at least one of the following information: implementation costs such as calculation complexity of the foregoing determining manner, a residual frequency offset of a channel between the first network device and the terminal device, a frequency offset processing capability of a physical channel between the first network device and the terminal device, and the like. Alternatively, the first network device may determine, based on event triggering, the first time offset information and the first frequency offset information in the foregoing determining manner. For example, a trigger event is that the first network device is to communicate with the terminal device.

S406: The first network device communicates with the terminal device based on the first offset information.

The following separately describes implementations of S406 when the first offset information includes the first time offset information and the first frequency offset information.

1. When the first offset information includes the first time offset information, the first network device may determine a first timing advance based on the first time offset information, and communicate with the terminal device based on the first timing advance. The following describes the content in detail by using Implementation 1 and Implementation 2.

Implementation 1:

The first time offset information is the first timing advance. During downlink transmission, the first network device may send a downlink signal to the terminal device in advance, where advanced duration is equal to the first timing advance. For example, the first time offset information is 6 ms, the first timing advance is 6 ms, and the first network device may send the downlink signal to the terminal device 6 ms in advance. During uplink transmission, the first network device may receive an uplink signal from the terminal device with a delay, where delayed duration is equal to the first timing advance. For example, the first time offset information is 6 ms, the first timing advance is 6 ms, and the first network device may receive the uplink signal from the terminal device with a delay of 6 ms. In the manner, data on a network device side may be aligned with data on a terminal device side.

Implementation 2:

Implementation 2 may include the following steps D1 to D4.

D1: The first network device may determine the first timing advance and a second timing advance based on the first time offset information.

The first timing advance may be a timing advance used by the first network device, and the second timing advance may be a timing advance used by the terminal device. Optionally, the second timing advance is less than or equal to a timing advance threshold, and a timing advance less than or equal to the timing advance threshold is a timing advance that can be processed by the terminal device.

Optionally, the first time offset information may be a sum of the first timing advance and the second timing advance.

D2: The first network device sends, to the terminal device, information indicating the second timing advance. Correspondingly, the terminal device receives, from the first network device, the information indicating the second timing advance.

Optionally, the first network device may send a timing advance command (timing advance command, TAC) to the terminal device by using an RAR, where the TAC includes the information indicating the second timing advance.

D3: The terminal device sends a second signal to the first network device based on the second timing advance. Specifically, the terminal device may send the second signal to the first network device in advance, where advanced duration is the second timing advance.

The second signal may be any uplink signal, for example, a PUCCH signal or a PUSCH signal.

D4: The first network device receives the second signal from the terminal device based on the first timing advance. Specifically, the first network device may receive the second signal from the terminal device with a delay, where delayed duration is the first timing advance.

A receiving moment of the uplink signal is related to the first timing advance. According to steps D1 to D4, the first network device may determine, based on the first timing advance, a time sequence location at which the uplink signal is received, to receive the uplink signal at the specified time sequence location.

In some possible manners, the first network device may communicate with the terminal device by using a plurality of beams. An example in which the plurality of beams include a second beam and a third beam is used below for description. Each of the second beam and the third beam is any beam in a beam set of the first network device. For example, the second beam or the third beam may be the first beam, or may be a beam other than the first beam. The first network device may communicate with the terminal device by using the second beam and the third beam according to steps D1 to D4.

In an example, a first timing advance corresponding to the second beam is the same as a first timing advance corresponding to the third beam, and a second timing advance corresponding to the second beam is also the same as a second timing advance corresponding to the third beam.

In another example, a first timing advance corresponding to the second beam is different from a first timing advance corresponding to the third beam, and the first timing advance corresponding to the second beam is also different from a second timing advance corresponding to the third beam. In this case, in step D1, the first network device may set different first timing advances and second timing advances for the second beam and the third beam. For example, the first timing advance corresponding to the second beam is a timing advance #a1, and the second timing advance corresponding to the second beam is a timing advance #b1; and the first timing advance corresponding to the third beam is a timing advance #a2, and the second timing advance corresponding to the third beam is a timing advance #b1. In step D2, the first network device sends, to the terminal device, information indicating the timing advance #b1 and the timing advance #b2. If the first network device communicates with the terminal device by using the second beam, in step D3, the terminal device sends the second signal to the first network device based on the timing advance #b1; and in step D4, the first network device receives the second signal based on the timing advance #a1. If the first network device communicates with the terminal device by using the third beam, in step D3, the terminal device sends the second signal to the first network device based on the timing advance #b2; and in step D4, the first network device receives the second signal based on the timing advance #a2. According to the example, for each beam, the first network device may receive a signal from the terminal device by using a first timing advance corresponding to the beam, so that quality of the signal received by using each beam can be improved, thereby improving communication efficiency. In addition, a receiving moment of an uplink signal is related to the first timing advance. Therefore, according to the example, the uplink signal can be received at specified time sequence locations of different beams, and phase compensation can be performed on a signal between the first network device and the terminal device, to ensure that the first network device and the terminal device are always in a synchronization state.

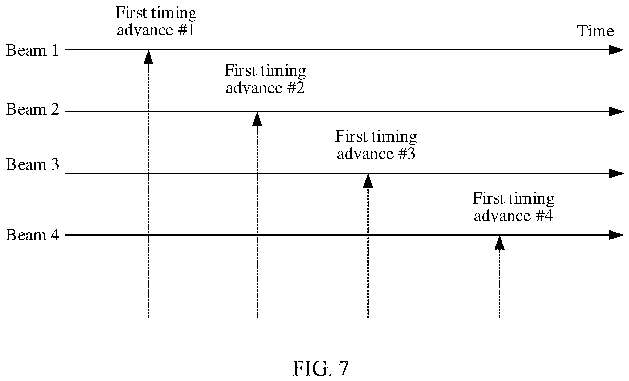

It should be understood that when the first network device communicates with the terminal device by using a plurality of beams, the plurality of beams may alternatively include more than two beams. In this case, first timing advances corresponding to all beams in the plurality of beams may be the same, first timing advances corresponding to some beams in the plurality of beams may be the same, or first timing advances corresponding to any two beams in the plurality of beams are different (as shown in FIG. 7).

2. When the first offset information includes the first frequency offset information, the first network device may perform phase compensation on the communication signal between the first network device and the terminal device based on the first frequency offset information.

During downlink transmission, the first network device may perform phase pre-compensation on a downlink signal based on the first frequency offset information, so that a frequency offset of the downlink signal falls within a range that can be processed by the terminal device.

For example, r(n) is an $n^{th}$ time-domain sampling point in the downlink signal, and n is a positive integer. After the first network device performs phase pre-compensation on r(n), an obtained signal is as follows:

$$r(n)e^{j\frac{2\pi\varepsilon n}{N}}.$$

N is a quantity of sampling points in one symbol of the downlink signal; and $\varepsilon$ is a normalized frequency offset, that is, the first frequency offset information divided by a subcarrier spacing.

In this way, the first network device does not need to adjust a transmitting time sequence of the terminal device, and after the terminal device synchronizes with the first network device, the terminal device can receive the downlink signal from the first network device.

During uplink transmission, the first network device may perform phase compensation on an uplink signal from the terminal device based on the first frequency offset information, to receive the uplink signal from the terminal device. For a manner in which the first network device performs phase compensation on the uplink signal from the terminal device based on the first frequency offset information, refer to the manner in which the first network device may perform phase pre-compensation on the downlink signal based on the first frequency offset information. Only the downlink signal is replaced with the uplink signal. According to the method, the terminal device can communicate with the first network device without perception and any modification.

According to the method shown in FIG. 4, a first network device determines offset information between the first network device and a terminal device, to determine offset information that exceeds a processing capability of the terminal device. In this way, in a scenario like an NTN scenario, the terminal device may communicate with the network device.

In addition, in the method, the first network device may determine a location of the terminal device by performing blind detection on a signal from the terminal device, and determine the offset information between the first network device and the terminal device based on the location of the terminal device. In this way, the first network device and the terminal device do not need to exchange a signal for determining the offset information, so that signaling overheads can be reduced.

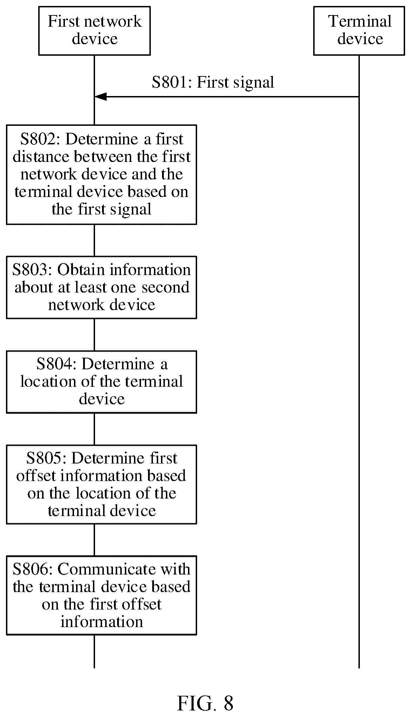

To resolve the foregoing problems, an embodiment of this application provides a communication method. The method may be applied to the communication systems shown in FIG. 1 to FIG. 3. The following describes a procedure of the method in detail with reference to a flowchart shown in FIG. 8.

S801: A terminal device sends a first signal. Correspondingly, a first network device receives the first signal from the terminal device.

For specific content of S801, refer to S401. Details are not described herein again.

S802: The first network device determines a first distance between the first network device and the terminal device based on the first signal.

Optionally, S802 may include steps E1 and E2.

E1: The first network device performs blind detection on a sequence of the first signal in a first beam in a first time window.

For specific content of step E1, refer to step A1. Details are not described herein again.

E2: The first network device determines that a distance between the ground and the first network device corresponding to first time in the first time window is the first distance. A correlation that is obtained through blind detection and that is between the sequence of the first signal and a first reference sequence is the largest at the first time in the first time window. For example, when the first time is Tmin, the first distance may be OC.

S803: The first network device obtains information about at least one second network device.

Any device in the at least one second network device is a satellite or a HAPS.

Information about each second network device in the at least one second network device indicates a distance between each second network device and the terminal device and a location of each second network device.

A network device #A is any device in the at least one second network device. S803 is described below by using the network device #A as an example.

Optionally, the first network device may obtain, from the network device #A, information indicating a distance (referred to as a second distance below) between the network device #A and the terminal device. Specifically, after determining the second distance, the network device #A may send, to the first network device, the information indicating the second distance. For a manner in which the network device #A determines the second distance, refer to S801 and S802. Details are not described herein again.

In some possible manners, the first network device may obtain, from the network device #A, information indicating a location of the network device #A.

In some other possible manners, the first network device may obtain, from a first device, information indicating a location of the network device #A. The first device may be a core network device, or may be another network device. The another network device is, for example, a terrestrial base station connected to the network device #A.

For example, the information indicating the location of the network device #A may be an ephemeris of the network device #A.

S804: The first network device determines a location of the terminal device based on the first distance, a location of the first network device, the distance between each second network device and the terminal device, and the location of each second network device.

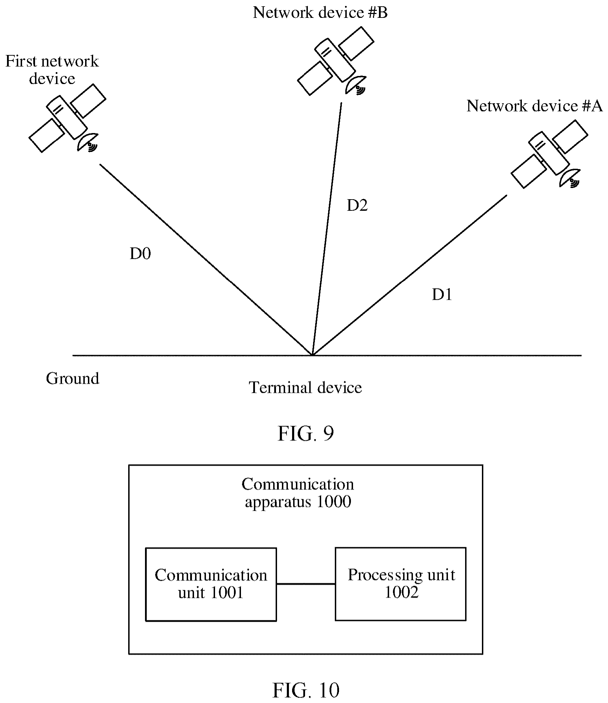

In some possible manners, the at least one second network device may include at least two second network devices. An example in which the at least one network device includes two second network devices (for example, a network device #A and a network device #B in FIG. 9) is used below for description.

For example, as shown in FIG. 9, in an ECEF coordinate system, the location of the terminal device is $(x, y, z)$, the location of the first network device is $(x_0, y_0, z_0)$, and locations of the network device #A and the network device #B are respectively $(x_{c1}, y_{c1}, z_{c1})$ and $(x_{c2}, y_{c2}, z_{c2})$; and the first distance between the first network device and the terminal device is D0, a distance between the network device #A and the terminal device is $D_1$, and a distance between the network device #B and the terminal device is D2. In this case, the following Equation Set 1 may be obtained:

$$\sqrt{(x-x_0)^2 + (y-y_0)^2 + (z-z_0)^2} = D0$$

$$\sqrt{(x-x_{c1})^2 + (y-y_{c1})^2 + (z-z_{c1})^2} = D1$$

$$\sqrt{(x-x_{c2})^2 + (y-y_{c2})^2 + (z-z_{c2})^2} = D2$$

Equation Set 1 is solved by using a Newton iteration method, so that the first network device may determine the location of the terminal device.

In the manner, the first network device may accurately determine the location of the terminal device based on the locations of the three network devices and the distances between the three network devices and the terminal device.

In some other possible manners, the at least one second network device may include one second network device (for example, a network device #A). The first network device may determine the location of the terminal device based on the first distance, the location of the first network device, a distance between each second network device and the terminal device, the location of each second network device, and a radius of the earth.

For example, in an ECEF coordinate system, the location of the terminal device is $(x, y, z)$, the location of the first network device is $(x_0, y_0, z_0)$, and a location of the network device #A is $(x_{c1}, y_{c1}, z_{c1})$; and the first distance between the first network device and the terminal device is D0, and a distance between the network device #A and the terminal device is D1. Assuming that the terminal device is located on the ground and the radius of the earth is R, the following Equation Set 2 may be obtained:

$$\sqrt{(x-x_0)^2 + (y-y_0)^2 + (z-z_0)^2} = D0$$

$$\sqrt{(x-x_{c1})^2 + (y-y_{c1})^2 + (z-z_{c1})^2} = D1$$

$$\sqrt{x^2 + y^2 + z^2} = R$$

Equation Set 2 is solved by using a Newton iteration method, so that the first network device may determine the location of the terminal device.

In the manner, the first network device may accurately determine the location of the terminal device based on the locations of the two network devices and the distances between the two network devices and the terminal device. Compared with the manner of determining the location of the terminal device by using Equation Set 1, in the manner, signaling overheads can be reduced, and calculation complexity can be reduced.

S805: The first network device determines first offset information based on the location of the terminal device.

S806: The first network device communicates with the terminal device based on the first offset information.

For specific content of S805 and S806, refer to S405 and S406. Details are not described herein again.

According to the method shown in FIG. 8, a first network device may determine a location of a terminal device based on locations of a plurality of network devices and distances between the plurality of network devices and the terminal device, and determine offset information between the first network device and the terminal device based on the location of the terminal device. In this way, the first network device may determine offset information that exceeds a processing capability of the terminal device. In this way, in a scenario like an NTN scenario, the terminal device may normally communicate with the network device.

Based on a same technical concept as the method embodiments in FIG. 4 to FIG. 9, an embodiment of this application provides a communication apparatus in FIG. 10, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 10, and includes a communication unit 1001 and a processing unit 1002. The communication apparatus 1000 may be used in the network device in the communication system shown in FIG. 1 and the satellite shown in FIG. 2 or FIG. 3, and may implement the communication method provided in the foregoing embodiments and instances of this application. Functions of the units in the communication apparatus 1000 are described below.

The communication unit 1001 is configured to receive and send data. The communication unit 1001 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1002 may be configured to support the communication apparatus 1000 in performing processing actions in the foregoing method embodiments. The processing unit 1002 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation, the communication apparatus 1000 is used in the first network device in the embodiment of this application shown in FIG. 4. A specific function of the processing unit 1002 in this implementation is described below.

The processing unit 1002 is configured to perform blind detection on a first signal in a first beam for receiving the first signal from a terminal device, to obtain second time offset information, where the second time offset information is reference time offset information between the first network device and the terminal device; determine second frequency offset information based on the second time offset information, where the second frequency offset information is reference frequency offset information between the first network device and the terminal device; determine a location of the terminal device based on the second time offset information and the second frequency offset information; determine first offset information based on the location of the terminal device, where the first offset information includes first time offset information and/or first frequency offset information, the first time offset information is sending time offset information between the first network device and the terminal device, and the first frequency offset information is sending frequency offset information between the first network device and the terminal device; and communicate, by using the communication unit 1001, with the terminal device based on the first offset information.

In some possible manners, the processing unit 1002 is specifically configured to perform blind detection on a sequence of the first signal in the first beam in a first time window, where time offset information corresponding to first time in the first time window is the second time offset information; a correlation that is obtained through blind detection and that is between the sequence of the first signal and a first reference sequence is the largest at the first time in the first time window; and the first time window is determined based on the first beam.

For example, the first time window is [Tmin, Tmax], where Tmin=OC/c, Tmax=OA/c, OA is a distance between the first network device and a point A, OC is a distance between the first network device and a point C, the point A is a point that is within coverage of the first beam and that is farthest from a subsatellite point of the first network device, the point C is a point that is within the coverage and that is closest to the subsatellite point, and c is a speed of light.

In some possible manners, the processing unit 1002 is specifically configured to determine a location curve corresponding to the second time offset information based on the second time offset information, where a distance between any point on the location curve and the first network device corresponds to the second time offset information; determine a first frequency offset range based on the location curve and a range of the first beam, where the first frequency offset range is a reference frequency offset range between the first network device and the terminal device; and perform blind detection on the sequence of the first signal within the first frequency offset range, to obtain the second frequency offset information, where the second frequency offset information is frequency offset information that makes the correlation that is obtained through blind detection and that is between the sequence of the first signal and the first reference sequence the largest.

In some possible manners, the processing unit 1002 is specifically configured to determine the first time offset information based on the location of the terminal device and a location of the first network device; and/or determine the first frequency offset information based on the location of the terminal device and the location, a speed, and a movement direction of the first network device.

Optionally, a first functional relationship exists among the location of the terminal device, the location of the first network device, and the first time offset information; and a second functional relationship exists among the location of the terminal device, the location, the speed, and the movement direction of the first network device, and the first frequency offset information.

In some possible manners, the processing unit 1002 is specifically configured to determine a second frequency offset range based on the location of the terminal device and the location, the speed, and the movement direction of the first network device, where the second frequency offset range is a sending frequency offset range between the first network device and the terminal device; and perform blind detection on a sequence of a communication signal between the first network device and the terminal device within the second frequency offset range, to obtain the first frequency offset information, where the first frequency offset information is frequency offset information that makes a correlation that is obtained through blind detection and that is between the sequence of the communication signal and a second reference sequence the largest.

In some possible manners, the processing unit 1002 is specifically configured to determine a first timing advance based on the first time offset information, and communicate, by using the communication unit 1001, with the terminal device based on the first timing advance; and/or perform phase compensation on the communication signal between the first network device and the terminal device based on the first frequency offset information.

In some examples, the processing unit 1002 is further configured to determine the first timing advance and a second timing advance based on the first time offset information; send, to the terminal device by using the communication unit 1001, information indicating the second timing advance, where the second timing advance is a timing advance used by the terminal device to process a second signal; and receive, by using the communication unit 1001, the second signal from the terminal device based on the first timing advance.

In some other examples, the processing unit 1002 is further configured to communicate, by using the communication unit 1001, with the terminal device based on the first offset information by using a second beam and a third beam, where each of the second beam and the third beam is any beam in a beam set of the first network device, and a first timing advance corresponding to the second beam is different from a first timing advance corresponding to the third beam.

Optionally, the first signal is a PRACH signal.

It should be noted that in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the conventional technologies, or all or a part of the technical solutions may be implemented in the form of a software product. The computer software product is stored in a storage medium and includes a plurality of instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

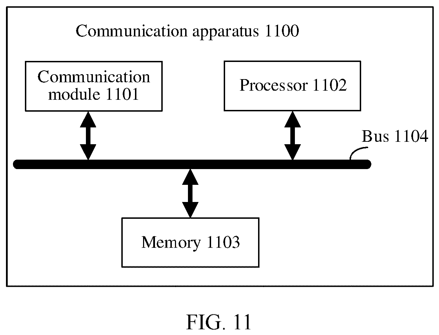

Based on a same technical concept, an embodiment of this application provides a communication apparatus shown in FIG. 11, and the communication apparatus may be configured to perform related steps in the foregoing method embodiments. The communication apparatus may be used in the network device in the communication system shown in FIG. 1 and the satellite shown in FIG. 2 or FIG. 3, may implement the communication method provided in the foregoing embodiments and instances of this application, and has functions of the communication apparatus shown in FIG. 10. Refer to FIG. 11. The communication apparatus 1100 includes a communication module 1101, a processor 1102, and a memory 1103. The communication module 1101, the processor 1102, and the memory 1103 are connected to each other.

Optionally, the communication module 1101, the processor 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication module 1101 is configured to receive and send data, to implement communication and exchange with another device. For example, the communication module 1101 may be implemented by using a physical interface, a communication module, a communication interface, or an input/output interface.

The processor 1102 may be configured to support the communication apparatus 1100 in performing processing actions in the foregoing method embodiments. When the communication apparatus 1100 is configured to implement the foregoing method embodiments, the processor 1102 may be further configured to implement the function of the foregoing processing unit 1002. The processor 1102 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In an implementation, the communication apparatus 1100 is used in the first network device in the embodiment of this application shown in FIG. 4. The processor 1102 is specifically configured to perform blind detection on a first signal in a first beam for receiving the first signal from a terminal device, to obtain second time offset information, where the second time offset information is reference time offset information between the first network device and the terminal device; determine second frequency offset information based on the second time offset information, where the second frequency offset information is reference frequency offset information between the first network device and the terminal device; determine a location of the terminal device based on the second time offset information and the second frequency offset information; determine first offset information based on the location of the terminal device, where the first offset information includes first time offset information and/or first frequency offset information, the first time offset information is sending time offset information between the first network device and the terminal device, and the first frequency offset information is sending frequency offset information between the first network device and the terminal device; and communicate, by using the communication module 1101, with the terminal device based on the first offset information.

For a specific function of the processor 1102, refer to the descriptions of the communication method provided in the foregoing embodiments and instances of this application, and the descriptions of specific functions of the communication apparatus 1000 in the embodiment of this application shown in FIG. 10. Details are not described herein again.

The memory 1103 is configured to store program instructions, data, and the like. Specifically, the program instructions may include program code, and the program code includes computer operation instructions. The memory 1103 may include a RAM, and may further include a nonvolatile memory (nonvolatile memory), for example, at least one magnetic disk memory. The processor 1102 executes the program instructions stored in the memory 1103, and uses the data stored in the memory 1103, to implement the foregoing function, to implement the communication method provided in the foregoing embodiments of this application.

It may be understood that the memory 1103 in FIG. 11 in this application may be a volatile memory or a nonvolatile memory, or may include a volatile memory and a nonvolatile memory. The nonvolatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program. When the computer program runs on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover the modifications and variations of this application provided that they fall within the scope of protection defined by the following claims and their equivalent technologies.

**Claims**

1. A communication method, applied to a first network device, and the method comprising:

   performing blind detection on a first signal in a first beam for receiving the first signal from a terminal device, to obtain second time offset information, wherein the second time offset information is reference time offset information between the first network device and the terminal device;
   determining second frequency offset information based on the second time offset information, wherein the second frequency offset information is reference frequency offset information between the first network device and the terminal device;
   determining a location of the terminal device based on the second time offset information and the second frequency offset information;
   determining first offset information based on the location of the terminal device, wherein the first offset information comprises first time offset information and/or first frequency offset information, the first time offset information is sending time offset information between the first network device and the terminal device, and the first frequency offset information is sending frequency offset information between the first network device and the terminal device; and
   communicating with the terminal device based on the first offset information.

2. The method according to claim 1, wherein performing blind detection on the first signal in the first beam for receiving the first signal from the terminal device comprises:

performing blind detection on a sequence of the first signal in the first beam in a first time window, wherein time offset information corresponding to first time in the first time window is the second time offset information; a correlation that is obtained through blind detection and that is between the sequence of the first signal and a first reference sequence is the largest at the first time in the first time window; and the first time window is determined based on the first beam.

3. The method according to claim 2, wherein the first time window is [Tmin, Tmax], wherein Tmin=OC/c, Tmax=OA/c, OA is a distance between the first network device and a point A, OC is a distance between the first network device and a point C, the point A is a point that is within coverage of the first beam and that is farthest from a subsatellite point of the first network device, the point C is a point that is within the coverage and that is closest to the subsatellite point, and c is a speed of light.

4. The method according to any one of claims 1 to 3, wherein determining the second frequency offset information based on the second time offset information comprises:

   determining a location curve corresponding to the second time offset information based on the second time offset information, wherein a distance between any point on the location curve and the first network device corresponds to the second time offset information;
   determining a first frequency offset range based on the location curve and a range of the first beam, wherein the first frequency offset range is a reference frequency offset range between the first network device and the terminal device; and
   performing blind detection on the sequence of the first signal within the first frequency offset range, to obtain the second frequency offset information, wherein the second frequency offset information is frequency offset information that makes the correlation that is obtained through blind detection and that is between the sequence of the first signal and the first reference sequence the largest.

5. The method according to any one of claims 1 to 4, wherein determining the first offset information based on the location of the terminal device comprises:

   determining the first time offset information based on the location of the terminal device and a location of the first network device; and/or
   determining the first frequency offset information based on the location of the terminal device and the location, a speed, and a movement direction of the first network device.

6. The method according to claim 5, wherein a first functional relationship exists among the location of the terminal device, the location of the first network device, and the first time offset information; and
   a second functional relationship exists among the location of the terminal device, the location, the speed, and the movement direction of the first network device, and the first frequency offset information.

7. The method according to claim 5 or 6, wherein determining the first frequency offset information based on the location of the terminal device and the location, the speed, and the movement direction of the first network device comprises:

   determining a second frequency offset range based on the location of the terminal device and the location, the speed, and the movement direction of the first network device, wherein the second frequency offset range is a sending frequency offset range between the first network device and the terminal device; and
   performing blind detection on a sequence of a communication signal between the first network device and the terminal device within the second frequency offset range, to obtain the first frequency offset information, wherein the first frequency offset information is frequency offset information that makes a correlation that is obtained through blind detection and that is between the sequence of the communication signal and a second reference sequence the largest.

8. The method according to any one of claims 1 to 7, wherein communicating with the terminal device based on the first offset information comprises:

   determining a first timing advance based on the first time offset information, and communicating with the terminal device based on the first timing advance; and/or
   performing phase compensation on the communication signal between the first network device and the terminal device based on the first frequency offset information.

9. The method according to any one of claims 1 to 8, wherein communicating with the terminal device based on the first offset information comprises:

   determining the first timing advance and a second timing advance based on the first time offset information;
   sending, to the terminal device, information indicating the second timing advance, wherein the second timing advance is a timing advance used by the terminal device to process a second signal; and
   receiving the second signal from the terminal device based on the first timing advance.

10. The method according to claim 9, wherein communicating with the terminal device based on the first offset information comprises:
    communicating with the terminal device based on the first offset information by using a second beam and a third beam, wherein each of the second beam and the third beam is any beam in a beam set of the first network device, and the first timing advance corresponding to the second beam is different from the first timing advance corresponding to the third beam.

11. The method according to any one of claims 1 to 10, wherein the first signal is a physical random access channel PRACH signal.

12. A communication apparatus, comprising:

    a communication unit, configured to receive and send data; and
    a processing unit, configured to perform the method according to any one of claims 1 to 11 by using the communication unit.

13. A communication system, comprising:

    a terminal device, configured to send a first signal; and
    a first network device, configured to implement the method according to any one of claims 1 to 11 based on the first signal.

14. A computer-readable storage medium, wherein the computer-readable storage medium stores a computer program, and when the computer program runs on a computer, the computer is enabled to perform the method according to any one of claims 1 to 11.

15. A chip, wherein the chip is coupled to a memory, and the chip reads a computer program stored in the memory, to perform the method according to any one of claims 1 to 11.

Network device 102

Feeder link

Service link

Terminal device

Network device 101

Beam or cell

FIG. 1

RAN

UE

Base station

CN

Uu

NG

Satellite

NTN gateway

RRU

FIG. 2

FIG. 3

```
┌─────────────┐                        ┌──────────┐
│First network│                        │ Terminal │
│   device    │                        │  device  │
└─────────────┘                        └──────────┘
       │          S401: First signal         │
       │◄────────────────────────────────────│
       │                                      │
┌──────────────────────┐                      │
│  S402: Perform blind  │                      │
│detection on the first │                      │
│signal, to obtain second│                     │
│   time offset          │                      │
│   information          │                      │
└──────────────────────┘                      │
       │                                      │
┌──────────────────────┐                      │
│ S403: Determine second│                      │
│frequency offset        │                      │
│information based on    │                      │
│the second time offset  │                      │
│   information          │                      │
└──────────────────────┘                      │
       │                                      │
┌──────────────────────┐                      │
│S404: Determine a      │                      │
│location of the terminal│                     │
│device based on the     │                      │
│second time offset      │                      │
│information and the     │                      │
│second frequency offset │                      │
│   information          │                      │
└──────────────────────┘                      │
       │                                      │
┌──────────────────────┐                      │
│S405: Determine first  │                      │
│offset information based│                     │
│on the location of the  │                      │
│terminal device         │                      │
└──────────────────────┘                      │
       │                                      │
┌──────────────────────┐                      │
│S406: Communicate with │                      │
│the terminal device     │                      │
│based on the first      │                      │
│offset information      │                      │
└──────────────────────┘                      │
       │                                      │
```

FIG. 4

FIG. 5

- - - - - -   Equal-time offset
                line

...............   Equal-frequency
                offset line

FIG. 6

FIG. 7

```
┌─────────────┐                              ┌──────────┐
│First network│                              │ Terminal │
│   device    │                              │  device  │
└─────────────┘                              └──────────┘
       │                 S801: First signal       │
       │◄─────────────────────────────────────────│
       │                                           │
┌─────────────────────┐                            │
│ S802: Determine a first                          │
│ distance between the first                       │
│ network device and the                           │
│ terminal device based on                         │
│     the first signal                             │
└─────────────────────┘                            │
       │                                           │
┌─────────────────────┐                            │
│ S803: Obtain information                         │
│ about at least one second                        │
│    network device                                │
└─────────────────────┘                            │
       │                                           │
┌─────────────────────┐                            │
│ S804: Determine a                                │
│ location of the terminal                         │
│       device                                     │
└─────────────────────┘                            │
       │                                           │
┌─────────────────────┐                            │
│ S805: Determine first                            │
│ offset information based                          │
│ on the location of the                           │
│   terminal device                                │
└─────────────────────┘                            │
       │                                           │
┌─────────────────────┐                            │
│ S806: Communicate with                           │
│ the terminal device based                        │
│ on the first offset                              │
│     information                                  │
└─────────────────────┘                            │
       │                                           │
```

FIG. 8

Network device #B

First network
device

Network device #A

D2

D0

D1

Ground

Terminal device

FIG. 9

Communication
apparatus 1000

Communication
unit 1001

Processing unit
1002

FIG. 10

Communication apparatus 1100

Communication
module 1101

Processor 1102

Bus 1104

Memory 1103

FIG. 11

## INTERNATIONAL SEARCH REPORT

| International application No. |
| --- |
| **PCT/CN2023/140561** |

| A. | CLASSIFICATION OF SUBJECT MATTER |
| --- | --- |

H04W 72/044(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, CJFD: 非地面通信, 盲检测, 偏移, 频偏, 频率, 时偏, 时间, 位置, 终端, non terrestrial networks, NTN, blind detection, offset, shift, frequency, time, location, beam, PRACH

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | INTEL CORPORATION. "R1-2005874: On UL Time and Frequency Synchronization for NTN." *3GPP TSG RAN WG1 102-e*, 28 August 2020 (2020-08-28), chapter 2 | 1-15 |
| A | CN 114765733 A (HUAWEI TECHNOLOGIES CO., LTD.) 19 July 2022 (2022-07-19) entire document | 1-15 |
| A | US 2022038139 A1 (TELEFONAKTIEBOLAGET LM ERICSSON (PUBL)) 03 February 2022 (2022-02-03) entire document | 1-15 |
| A | US 2022394650 A1 (GUANGDONG OPPO MOBILE TELECOMMUNICATIONS CORP., LTD.) 08 December 2022 (2022-12-08) entire document | 1-15 |
| A | WO 2022154559 A1 (LG ELECTRONICS INC.) 21 July 2022 (2022-07-21) entire document | 1-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 March 2024** | **11 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/140561** |

### C.    DOCUMENTS CONSIDERED TO BE RELEVANT

| Category* | Citation of document, with indication, where appropriate, of the relevant passages | Relevant to claim No. |
| --- | --- | --- |
| A | NEC. "R1-2105410: Timing Relationship Enhancements NTN." *3GPP TSG RAN WG1 #105-e*, 27 May 2021 (2021-05-27), entire document | 1-15 |

Form PCT/ISA/210 (second sheet) (July 2022)

**INTERNATIONAL SEARCH REPORT**
Information on patent family members

International application No.

**PCT/CN2023/140561**

| Patent document cited in search report | | | Publication date (day/month/year) | Patent family member(s) | | | Publication date (day/month/year) |
|---|---|---|---|---|---|---|---|
| CN | 114765733 | A | 19 July 2022 | WO | 2022152000 | A1 | 21 July 2022 |
| | | | | EP | 4266087 | A1 | 25 October 2023 |
| US | 2022038139 | A1 | 03 February 2022 | EP | 3874621 | A1 | 08 September 2021 |
| | | | | WO | 2020089471 | A1 | 07 May 2020 |
| US | 2022394650 | A1 | 08 December 2022 | JP | 2023521544 | A | 25 May 2023 |
| | | | | KR | 20220146498 | A | 01 November 2022 |
| | | | | EP | 4084553 | A1 | 02 November 2022 |
| | | | | EP | 4084553 | A4 | 04 January 2023 |
| | | | | WO | 2021168661 | A1 | 02 September 2021 |
| WO | 2022154559 | A1 | 21 July 2022 | US | 2023254794 | A1 | 10 August 2023 |
| | | | | EP | 4142383 | A1 | 01 March 2023 |
| | | | | JP | 2023539147 | A | 13 September 2023 |
| | | | | KR | 20230035062 | A | 10 March 2023 |

Form PCT/ISA/210 (patent family annex) (July 2022)

**EP 4 661 539 A1**

## REFERENCES CITED IN THE DESCRIPTION

**Patent documents cited in the description**

- CN 202310171868